# EUROPEAN PATENT SPECIFICATION

(11) **EP 3 374 178 B1**
(45) Date of publication and mention of the grant of the patent: **13.10.2021**
(21) Application number: 15892796.2
(22) Date of filing: 13.11.2015
(51) Int. Cl.: B32B 7/00, B32B 7/02, B32B 7/04, B32B 7/10, B32B 15/00, B32B 15/04, B32B 27/00, B32B 27/06, B32B 27/08, B32B 27/28, B32B 27/30, B32B 27/32, B32B 27/36, B41M 3/14, B32B 3/00, B32B 3/02, B32B 3/18, B32B 3/26, B32B 3/30, B42D 15/00, B42D 25/00

(54) **PROCESS FOR MANUFACTURING A NON-OPAQUE LAYER FOR A MULTILAYER STRUCTURE COMPRISING A WINDOW, AND A MULTILAYER STRUCTURE WITH SUCH A NON-OPAQUE LAYER**
VERFAHREN ZUR HERSTELLUNG EINER NICHT-OPAKEN SCHICHT FÜR EINE MEHRSCHICHTIGE STRUKTUR MIT EINEM FENSTER, UND EINE MEHRSCHICHTIGE STRUKTUR MIT SOLCH EINER NICHT-OPAKEN SCHICHT
PROCÉDÉ POUR FABRIQUER UNE COUCHE NON OPAQUE POUR UNE STRUCTURE MULTICOUCHE COMPRENANT UNE FENÊTRE, ET STRUCTURE MULTICOUCHE AVEC UNE TELLE COUCHE NON OPAQUE

(43) Date of publication of application: 19.09.2018
(73) Proprietor: Linxens Holding, 78200 Mantes-la-Jolie (FR); Arjo Systems, 92300 Levallois Perret (FR)
(72) Inventor: KHAIRALLAH, Jessy, Bangkok 10110 (TH); SAEINGTHONG, Kreangsak, Samut Prakan 10540 (TH); VERMEULIN, Alice, 75015 Paris (FR); ROUCH-PAULIN, Anthony, 34770 Gigean (FR)
(74) Representative: Regi, François-Xavier
(86) International application number: PCT/IB2015/002668
(87) International publication number: WO 2017/081508

(56) References cited:
- WO-A1-2014/203199
- US-A1- 2005 230 959
- US-A1- 2014 197 626
- None

## Description

The invention relates to improvements in the domain of processes for manufacturing multilayer structures comprising a non-opaque window. Such a non-opaque window, which may be transparent, is used for instance in security documents or cards having laminate structures, for increasing the difficulty to counterfeit and forge them.

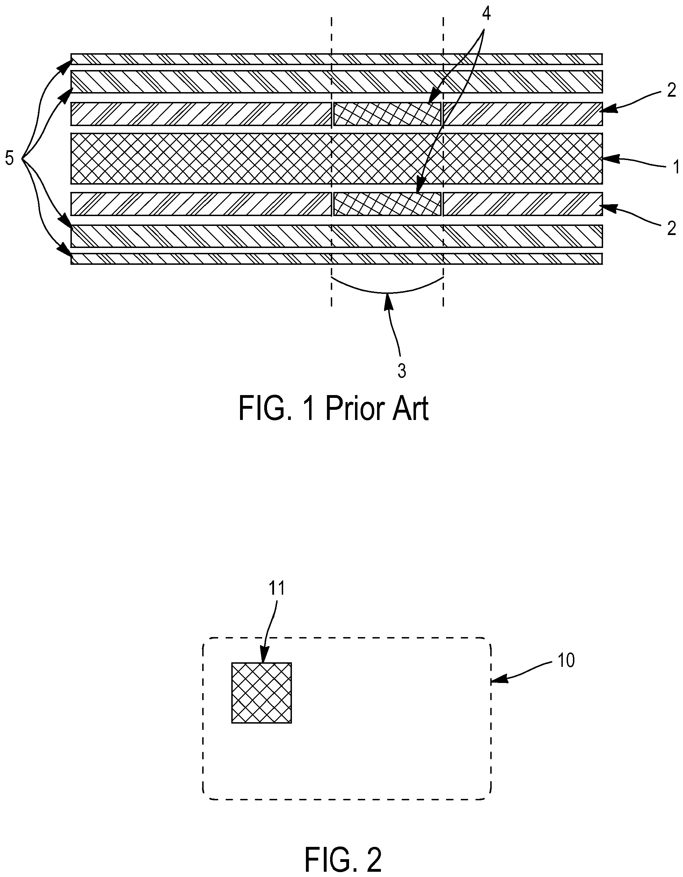

Figure 1 shows a multilayer structure used in the course of a prior art manufacturing process of this type. It comprises
- a transparent substrate 1 including a thermoplastic material,
- compensation layers 2 with a window 3 and
- transparent patches 4 positioned in the windows 3 over the transparent substrate 1.

Other layers 5 may be stacked up on one or both sides of such a structure, before lamination. Patent application n° WO 2013/038361 discloses same or similar multilayer structures.

The manufacturing process of such a structure requires a precise alignment of the various layers which add some complexity to this kind of manufacturing process. Moreover, these complex additional process steps increase manufacturing time and costs.

Another manufacturing process is disclosed in patent application n° WO 2014/203199A1. In this process, layers having a window are laminated with a transparent layer made of thermoplastic material. Both the layers having a window and the transparent layer will be part of the final multilayer structure as it will be used. But, such a multilayer structure obtained with such a process may have defaults and deformations.

An aim of the invention consists in simplifying and/or improving manufacturing processes of this type.

This aim is at least partly achieved with a process according to claim 1 for manufacturing a non-opaque layer to be included in a multilayer structure comprising at least one non-opaque window. Indeed, thanks to the process of claim 1, a non-opaque layer is made with a region having an extra-thickness which is more easily inserted and aligned with the window or cu-out made in an adjacent layer. The region with the extra-thickness may sufficiently fill this window or cut-out for avoiding the use of patches in the window. Further, the patterned plate which is heated for making the non-opaque material flowing in its cavity, is removed and is not part of the final structure. The material of the patterned plate can be specifically chosen for its function, i.e. forming a cavity within which the non-opaque material can flow for shaping the region with the extra-thickness.

Further features and/or advantages of the manufacturing process of claim 1 are the objects of claims 2 to 10.

According to another aspect, the invention is a process according to any one of claims 11 to 16 for manufacturing a multilayer structure comprising a non-opaque layer.

According to another aspect, the invention is a process according to any one of claims 17 to 21 for manufacturing a security article comprising a multilayer structure.

According to another aspect, the invention is a semi-finished product according to claims 22 to 24.

Other features and advantages of the invention will be apparent from the following description and from an inspection of the accompanying drawings in which:
- Figure 1 is a schematic cross section of a stack up of layers to be used in a prior art process;
- Figure 2 Is a schematic front view of an example of a card with a clear window, manufactured according to the invention;
- Figure 3 is a schematic cross section of a non-opaque layer inserted between patterned and covering sheets, before lamination;
- Figure 4 is a schematic cross section of the non-opaque layer of Figure 3, with a region having an extra-thickness resulting from the lamination;
- Figure 5 is a schematic cross section of a non-opaque layer with a region having an extra-thickness, laminated with compensation and finishing layers, in a finished card;
- Figure 6 is schematic cross section, similar to the one of figure 5, of a multilayer structure obtained according to another embodiment of the inventive process ; and
- Figure 7 is schematic cross section, similar to the one of figure 5 or 6, of a multilayer structure obtained according to another embodiment of the inventive process.

On the drawings, same reference numerals denote the same elements.

The invention is hereafter explained with reference to identity card applications. However, it is to be understood that the invention can be implemented for other applications such as smartcards, passports, badges, etc., and in particular, when a see-through portion or window is required.

Figure 2 shows a card 10 with a see-through window 11 (which may be a clear or transparent window, or more generally a non-opaque window).

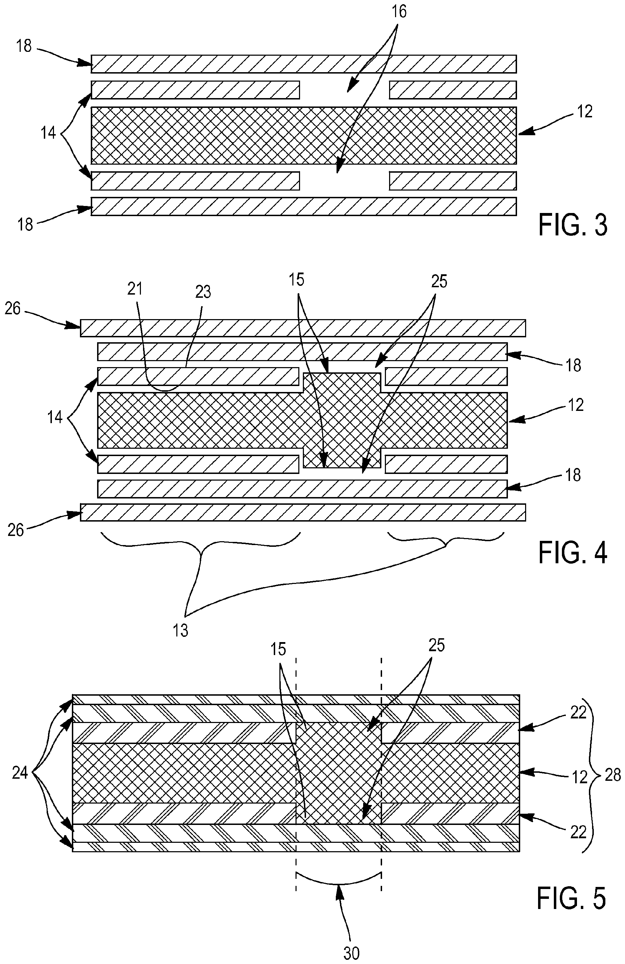

An example of process according to the invention is described with reference to Figures 3 to 5. According to this example, an insert or inlay is achieved in the first place. As illustrated on figure 3, for obtaining a card 10, the manufacturing process comprises embossing a middle layer or inlay. Consequently, a non-opaque layer 12 is provided. Such a non-opaque layer 12 is made of non-opaque plastic material including but not limited to one of the following compounds: polycarbonate (PC), poly(vinyl-chloride) (PVC), polyethylene terephthalate (PET), polyethylene terephthalate glycol modified (PETg), polyethylene terephthalate film (PETf), polylactic acid (PLA), polyethylene (PE) or polyestercarbonate (PEC). The non-opaque layer 12 can be a stack up of different layers. The initial thickness of the non-opaque layer 12 (before embossing and lamination) is for example in the range of 100 µm up to 650µm.

The layer 12 of non-opaque material is then placed between patterned plates, sheets or layers 14. The material of these patterned plates (or covering them) is chosen for example in order not to stick to the layer 12 of non-opaque material, after its embossing. Openings are made in such patterned plates for example by punching. Covering sheets or plates 18 are placed so as to cover respectively each patterned plate 14 and its opening(s). Cavities 16 are then obtained. Each cavity 16 opens toward the respective main surface of the layer 12 of non-opaque material. The material used for forming the patterned plates 14 and covering sheets 18 is included in, but not limited to, the list of following compounds: paper, metal and liner plastic film.

As show on Figure 4, this stack of layer 12, plates 14 and sheets 18 is then laminated between lamination plates 26, for embossing the layer 12 of non-opaque material. This first lamination process comprises a hot pressing cycle followed by a cool cycle. For example, when the non-opaque material is polycarbonate, during the hot pressing cycle, the non-opaque material is pressed with a temperature in a range from 160°C to 195°C and a pressure in a range from 17 to 110 N/cm², for a duration between 15 and 45 mn. More generally, for other materials than polycarbonate, during the hot pressing cycle, the non-opaque material may be pressed with a temperature in a range from 120°C to 195°C and a pressure in a range from 17 to 110 N/cm², for a duration between 15 and 45 mn. After the hot pressing cycle, the non-opaque material has flowed in the cavities 16. For example, when the non-opaque material is polycarbonate, during the cool pressing cycle, the stack of layers 12, 14, 18 is pressed with a temperature in a range from 15°C to 25°C and a pressure in a range from 50 to 220 N/cm², for a duration between 13 and 45 mn. The cool cycle allows "freezing" the layer 12 of non-opaque material and limits its shrinking.

Alternatively, according to an embodiment which is not illustrated, the openings 16 are not punched over the whole thickness of the patterned plates 14. In this case, cavities or hollows 16 are rather etched or milled over a part of the patterned plate thickness. Covering sheets 18 and/or lamination plates 26 become then optional. In other words, they are all part of the patterned plates 14. The patterned plates are then positioned over the layer of non-opaque material so that each cavity opens toward the respective main surface of the layer of non-opaque material.

After the hot pressing cycle, the non-opaque material has flowed in the cavities 16. The final thickness of the layer 12 of non-opaque material, in a first region 13, wherein the layer 12 of non-opaque material is thinner, is close to the initial thickness of layer 12 before lamination (i.e. within a range of 0 to 20 µm thinner). The final thickness of the layer 12 of non-opaque material, in a second region 15, wherein the layer 12 of non-opaque material is the thickest, is 10 to 80 % thicker than the thickness of the first region 13. The layer 12 of non-opaque material consequently has an extra-thickness (in the second region 15 compared to the first region 13), which substantially corresponds to the depth of the cavities 16.

After this first lamination process, the patterned plates 14 and covering 18 sheets are separated and removed from the layer 12 of non-opaque material. Both main surfaces of the layer 12 of non-opaque material are then free. Possibly, the material of the patterned plates 14 and covering 18 sheets is such that these main surfaces of the layer 12 of non-opaque material have a controlled roughness for improving the cohesion with further layers.

The layer 12 of non-opaque material with its extra-thickness regions 15 is subsequently prepared for a second lamination process, for making the final card structure shown on Figure 5.

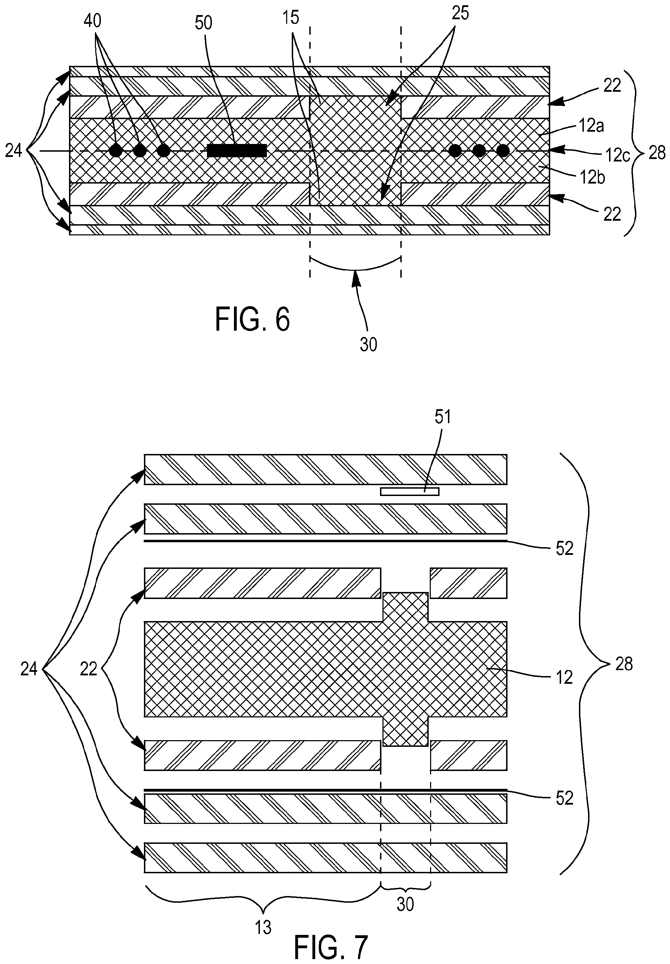

Compensation 22 and finishing 24 layers are laid over the layer 12 of non-opaque material (the compensation layers 22 first laid over the layer 12 of non-opaque material and then the finishing layers 24 respectively laid over each compensation layer 22). The function of a compensation layer 22 is to compensate the extra-thickness of the layer 12, so as to have a substantially flat surface over which the finishing layer 24 with lay. The compensation layers 22 and finishing layers 24 are for example made of plastic materials which are compatible with the material used for layer 12. For example, if the layer 12 is in polycarbonate material, the compensation layers 22 and finishing layers 24 may be in polycarbonate material too, within the needed thickness in order to reach the final targeted card thickness. For example, the layer 12 is transparent and 340µm thick in the first region 13, the compensation layers 22 are white and 100µm thick and the finishing layers 24 are transparent and each made of two layers, respectively 50 and 100µm thick (as show on figure 7 which will be described below with more details).

Each compensation layer 22 has a window 25 in coincidence with the second region 15 (i.e. the region of the layer 12 of non-opaque material having an extra-thickness). It is easy to align the second regions 15 of the layer 12 of non-opaque material and the windows 25, therefore simplifying and rendering more efficient the manufacturing process. Indeed, the extra-thickness of the second regions 15 the layer 12 of non-opaque material can be used for abutting the edges of the windows 25. In other words, the window 25 is filled in by the second region 15 the layer 12 of non-opaque material. Even, if due to tolerances, it remains a small gap between the edges of second region 25 and those of the windows 25, it will not have any consequence since during a second lamination process, the possible gap will be filled (the non-opaque material and/or the material of the compensation layers 22 will flow or creep into this gap).

After the second lamination process, this stack of layers 12, 22, 24 forms a multilayer structure (or laminate) 28. Of course only layers 12 and 22 can form a multilayer structure which can be sufficient for other applications or purposes.

With the above-described manufacturing process, several cards 10 are then manufacturing at once and cut out in the multilayer structure 28 to make final cards. This manufacturing process allows making several multilayers structures with precise alignment within a repeatable, efficient and costs effective process.

According this invention the alignment of non-opaque plastic material within the window is accurate and the application of a security feature bigger than the window will not be deformed whereas in the case of the patch in the prior art, the non accurate alignment will induce a deformation of the security feature at the boundary of the window.

According to another embodiment shown on figure 6, the layer of non-opaque material is made of two layers 12a and 12b of the same non-opaque material. Originally, these layers 12a and 12b of non-opaque material are separate. Then, before the step above-described with regard to figure 3, an antenna 40 (the dots on Fig. 6 represent the cross-section of the antenna loops) and a chip 50 are inserted between layers 12a and 12b of non-opaque material. The next steps of the process are similar to the ones above-described. The dotted line 12c between layers 12a and 12b only virtually separate layers 12a and 12b, but of course has no physical materiality after the lamination step resulting in a single layer of non-opaque material with its extra-thickness region 15.

Another embodiment of the inventive process is shown on figure 7. On this figure, the layer 12 of non-opaque material is inserted between compensation layers 22 and finishing layers 24. For this illustrated example, a security element 51 is inserted between two finishing layers 24 covering the same side of the multilayer structure 28. This security element 51 can have a shape with dimensions larger or smaller than the corresponding ones of the window 30. A security background 52 can also be applied on a layer or inserted between two layers of the multilayer structure 28. For this illustrated example, security backgrounds 52 are applied on a finishing layer 24, facing a compensation layer 22, on each side of the multilayer structure 28. For example, in the illustrated multilayer structure 28, the layer 12 is transparent and 340µm thick in the first region 13, the compensation layers 22 are white and 100µm thick and the finishing layers 24 are transparent and each made of two layers, respectively 50 and 100µm thick (the thinner being internal).

Many variations of the above-described processes can be envisioned. For examples
- see-through windows 30 corresponding to the second regions 15 on each side of the multilayer structure 28 can have different shapes and/or sizes;
- the non-opaque plastic material of layer 12 can be mass-colored.

The layer 12 and/or the multilayer structure 28 can be used for many applications, for example:
- according to one application, the layer 12 does not contain any smart component, in this case data can be stored in magnetic strips inserted between finishing layers (as the security background 52, shown on figure 7);
   - according to another application, the layer 12 is inserted in a multilayer structure 28 which will be milled in an area different from the window 30, for attaching a chip module with terminals for contact communication with a card reader;
- according to another application, an antenna and a chip are inserted in the layer 12 as already described with regard to figure 6, for making a contactless card;
- according to another application, an antenna is inserted between two layers constituting the layer 12, prior to laminate it in a multilayer structure and milling a cavity within which a chip module with terminals will be attached and connected to the antenna for making a dual interface card;
- according to another application, an antenna and a chip are inserted in the layer 12 as already described with regard to figure 6, and a cavity is milled in the multilayer structure 28, for accommodating a chip module with terminals and achieving an hybrid card.

## Claims

1. A process for manufacturing a non-opaque layer (12) for a multilayer structure (28) comprising at least one window (30), the process comprising the steps of
a) providing at least one layer (12) of a non-opaque plastic material, having an initial thickness,
**characterized in that** it further comprises
b) providing a patterned plate (14) having at least one cavity (16) the size of which corresponds to said at least one window (30),
c) covering at least an area of said at least one layer (12) of non-opaque plastic material with the patterned plate (14), the cavity (16) being open toward a first surface of said at least one layer (12) of non-opaque plastic material,
d) pressing the patterned plate (14) against the first surface of said at least one layer (12) of non-opaque plastic material, so as to form in said at least one layer (12) of non-opaque plastic material, at least a first region (13) and a second region (15), the second region (15) corresponding to the cavity (16) and having an extra-thickness compared to the first region (13),
e) removing the patterned plate (14) from the first surface of said at least one layer (12) of non-opaque plastic material.

2. A process according to claim 1, wherein the cavity (16) is an opening through the whole thickness of the patterned plate (14).

3. A process according to claim 1 or 2, wherein a covering plate (18) is provided for covering the opening when pressing the patterned plate (14) against the first surface of said at least one layer (12) of non-opaque plastic material, so that the patterned plate (14) is arranged between the covering plate (18) and said at least one layer (12), the patterned plate (14) and the covering plate (18) being removed, once the second region (15) is formed.

4. A process according to claim 1, wherein the cavity (16) is a hollow in the patterned plate (14).

5. A process according to any preceding claim, wherein said at least one layer (12) of non-opaque plastic material is a thermoplastic comprised in the list of polycarbonate, poly(vinyl-chloride), polyethylene terephthalate, polyethylene terephthalate glycol modified, polyethylene terephthalate film, polylactic acid, polyethylene and polyestercarbonate.

6. A process according to any preceding claim, comprising at least a hot pressing cycle.

7. A process according to the preceding claim, comprising a hot pressing cycle of said at least one layer (12) of non-opaque plastic material and said patterned plate (14) with a temperature in a range from 120°C to 195°C and a pressure in a range from 17 to 110 N/cm², for a duration comprised between 15 and 45 mn.

8. A process according to the preceding claim, comprising at least a cool pressing cycle, after the hot pressing cycle.

9. A process according to the preceding claim, comprising a cool pressing cycle, after the hot pressing cycle, with a temperature in a range from 15°C to 25°C and a pressure in a range from 50 to 220 N/cm², for a duration comprised between 13 and 45 mn.

10. A process according to any preceding claim, wherein said at least one layer (12) of non-opaque plastic material is made of a thermoplastic polymer or a thermally reticulated polymer, having a glass-transition temperature between -100°C and 300°C, and preferentially between 50°C and 190°C.

11. A process for manufacturing a multilayer structure (28), comprising the steps of
- providing at least one layer (12) of non-opaque plastic material, obtained from the process according to one of the preceding claims,
- providing a compensation layer (22) having at least one window (25) cut out through the entire thickness of the compensation layer (22), and
- laying the compensation layer (22) over at least a part of the first region of said at least one layer (12) of non-opaque plastic material, with the second region (15) of said at least one layer (12) of non-opaque plastic material, previously formed, and the window (25) of the compensation layer (22) being in coincidence, and
- laminating a multilayer comprising said at least one layer (12) of non-opaque plastic material and the compensation layer (22) for obtaining the multilayer structure (28).

12. A process according to the preceding claim, further comprising cutting out at least one card (10), or at least part of a passport or a passport page in the multilayer structure (28).

13. A process according to any preceding claim, wherein two layers of non-opaque plastic material are laminated together for forming said at least one layer (12) of non-opaque plastic material.

14. A process according to the preceding claim, wherein at least one element chosen in the list consisting of a chip (50) for contactless communication and an antenna (40), is inserted between the two layers of non-opaque plastic material before the lamination for forming said at least one layer (12) of non-opaque plastic material.

15. A process according to any one of claims 11 to 14, wherein at least one finishing layer (24) is laminated with said at least one layer (12) of non-opaque plastic material and said compensation layer (22) so as to overlap at least a part of the compensation layer (22) and the second region (15) of said at least one layer (12) of non-opaque plastic material.

16. A process according to any one of claims 11 to 15, wherein a compensation layer (22) is laminated on each side of said at least one layer (12) of non-opaque plastic material, each compensation layer (22) having a window (25) cut out through the entire thickness of the compensation layer (22) in coincidence with the second region (15).

17. A process for manufacturing a security article, comprising implementing a process for manufacturing a multilayer structure (28) according to any one of claims 11 to 16, and including, in said security article, the multilayer structure (28) obtained by said process for manufacturing the multilayer structure (28), the security article being chosen in the list consisting of a passport, a page of passport, an identification card, a driving license, a transportation card, an access card, a coin, a casino coin, a casino plaquette, a credit card, a payment card, a banknote, a voucher and a secured label.

18. A process according to claim 17, wherein a security element is embedded in, or applied on, said at least one layer (12) of non-opaque plastic material.

19. A process according to claim 16 or 17, wherein a security element (51, 52) is inserted between two layers, or applied on a layer, chosen in the list consisting of said at least one layer (12) of non-opaque plastic material, said at least one compensation layer (22) and a finishing layer (24).

20. A process according to claims 18 or 19, wherein the security element is comprised in the list consisting of a security thread, a foil, a patch, a printing, a metallization, and a demetallization.

21. A process according to any one of the preceding claims, wherein said at least one layer (12) of non-opaque plastic material is made by injection around at least one element chosen in the list consisting of a chip (50) for contactless communication and an antenna (40).

22. A semi-finished product for the manufacturing a multilayer structure, consisting in one layer (12) of non-opaque plastic material obtained from the process according to any one of claims 1 to 10, having at least a first region (13) and at least a second region (15), the second region (15) being integrally formed with the first region (13), having an extra-thickness compared to the first region (13), and forming a single and homogeneous layer over its whole thickness.

23. A semi-finished product according to the preceding claim, wherein at least one element chosen in the list consisting of a chip (50) for contactless communication and an antenna (40) is inserted in the layer (12) of non-opaque plastic material.

24. A semi-finished product according to claim 22 or 23 wherein the layer (12) of non-opaque plastic material is made of a thermoplastic material.

## Patentansprüche

1. Verfahren zur Herstellung einer nicht-opaken Schicht (12) für eine mehrschichtige Struktur (28) mit mindestens einem Fenster (30), wobei das Verfahren die Schritte umfasst:
a) Bereitstellen von mindestens einer Schicht (12) eines nicht-opaken Kunststoffmaterials mit einer Anfangsdicke,
**dadurch gekennzeichnet, dass** es ferner umfasst:
b) Bereitstellen einer strukturierten Platte (14) mit mindestens einem Hohlraum (16), dessen Größe dem mindestens einen Fenster (30) entspricht,
c) Bedecken mindestens eines Bereichs der mindestens einen Schicht (12) des nicht-opaken Kunststoffmaterials mit der strukturierten Platte (14), wobei der Hohlraum (16) in Richtung einer ersten Oberfläche der mindestens einen Schicht (12) des nicht-opaken Kunststoffmaterials offen ist,
d) Pressen der strukturierten Platte (14) gegen die erste Oberfläche der mindestens einen Schicht (12) des nicht-opaken Kunststoffmaterials, um so in der mindestens einen Schicht (12) des nicht-opaken Kunststoffmaterials mindestens eine erste Region (13) und eine zweite Region (15) zu bilden, wobei die zweite Region (15) dem Hohlraum (16) entspricht und verglichen mit der ersten Region (13) eine Extradicke aufweist,
e) Entfernen der strukturierten Platte (14) von der ersten Oberfläche der mindestens einen Schicht (12) des nicht-opaken Kunststoffmaterials.

2. Verfahren nach Anspruch 1, wobei der Hohlraum (16) eine Öffnung durch die gesamte Dicke der strukturierten Platte (14) hindurch ist.

3. Verfahren nach Anspruch 1 oder 2, wobei eine Abdeckplatte (18) zum Abdecken der Öffnung bereitgestellt wird, wenn die strukturierte Platte (14) gegen die erste Oberfläche der mindestens einen Schicht (12) des nicht-opaken Kunststoffmaterials gepresst wird, so dass die strukturierte Platte (14) zwischen der Abdeckplatte (18) und der mindestens einen Schicht (12) angeordnet ist, wobei die strukturierte Platte (14) und die Abdeckplatte (18) entfernt werden, nachdem die zweite Region (15) gebildet worden ist.

4. Verfahren nach Anspruch 1, wobei der Hohlraum (16) eine Aushöhlung in der strukturierten Platte (14) ist.

5. Verfahren nach einem der vorhergehenden Ansprüche, wobei die mindestens eine Schicht (12) des nicht-opaken Kunststoffmaterials ein Thermoplast ist, der in der Liste aus Polycarbonat, Poly(vinylchlorid), Polyethylenterephthalat, glykolmodifiziertem Polyethylenterephthalat, Polyethylenterephthalatfilm, Polymilchsäure, Polyethylen und Polyestercarbonat enthalten ist.

6. Verfahren nach einem der vorhergehenden Ansprüche, umfassend mindestens einen Heißpresszyklus.

7. Verfahren nach einem der vorhergehenden Ansprüche, umfassend einen Heißpresszyklus der mindestens einen Schicht (12) des nicht-opaken Kunststoffmaterials und der strukturierten Platte (14) mit einer Temperatur in einem Bereich von 120 °C bis 195 °C und einem Druck in einem Bereich von 17 bis 110 N/cm² für eine Dauer zwischen 15 und 45 Minuten.

8. Verfahren nach einem der vorhergehenden Ansprüche, umfassend mindestens einen Kaltpresszyklus nach einem Heißpresszyklus.

9. Verfahren nach einem der vorhergehenden Ansprüche, umfassend einen Kaltpresszyklus nach dem Heißpresszyklus mit einer Temperatur in einem Bereich von 15°C bis 25°C und einem Druck in einem Bereich von 50 bis 220 N/cm² für eine Dauer zwischen 13 und 45 Minuten.

10. Verfahren nach einem der vorhergehenden Ansprüche, wobei die mindestens eine Schicht (12) des nicht-opaken Kunststoffmaterials aus einem thermoplastischen Polymer oder thermisch vernetzten Polymer mit einer Glasübergangstemperatur zwischen -100 °C und 300 °C und vorzugsweise zwischen 50 °C und 190 °C hergestellt wird.

11. Verfahren zur Herstellung einer mehrschichtigen Struktur (28), umfassend die Schritte:
- Bereitstellen mindestens einer Schicht (12) aus nicht-opakem Kunststoffmaterial, die aus dem Verfahren gemäß einem der vorhergehenden Ansprüche erhalten wurde,
- Bereitstellen einer Kompensationsschicht (22) mit mindestens einem Fenster (25), das durch die gesamte Dicke der Kompensationsschicht (22) hindurch ausgeschnitten worden ist, und
- Legen der Kompensationsschicht (22) über mindestens einen Teil der ersten Region der mindestens einen Schicht (12) des nicht-opaken Kunststoffmaterials, wobei die zweite Region (15) der mindestens einen Schicht (12) des nicht-opaken Kunststoffmaterials, die zuvor gebildet wurde, und das Fenster (25) der Kompensationsschicht (22) in Übereinstimmung sind, und
- Laminieren einer Mehrschicht, welche die mindestens eine Schicht (12) des nicht-opaken Kunststoffmaterials und die Kompensationsschicht (22) umfasst, um die mehrschichtige Struktur (28) zu erhalten.

12. Verfahren nach einem der vorhergehenden Ansprüche, des Weiteren umfassend Ausschneiden mindestens einer Karte (10) oder mindestens eines Teils eines Reisepasses oder einer Reisepassseite in der mehrschichtigen Struktur (28).

13. Verfahren nach einem der vorhergehenden Ansprüche, wobei zwei Schichten des nicht-opaken Kunststoffmaterials zusammenlaminiert werden, um die mindestens eine Schicht (12) des nicht-opaken Kunststoffmaterials zu bilden.

14. Verfahren nach einem der vorhergehenden Ansprüche, wobei vor der Laminierung zur Bildung der mindestens einen Schicht (12) des nicht-opaken Kunststoffmaterials mindestens ein Element ausgewählt aus der Liste bestehend aus einem Chip (50) zur kontaktlosen Kommunikation und einer Antenne (40) zwischen die beiden Schichten aus nicht-opakem Kunststoffmaterial eingefügt wird.

15. Verfahren nach einem der Ansprüche 11 bis 14, wobei mindestens eine Decküberzugschicht (24) mit der mindestens einen Schicht (12) des nicht-opaken Kunststoffmaterials und der Kompensationsschicht (22) laminiert wird, so dass sie mindestens einen Teil der Kompensationsschicht (22) und der zweiten Region (15) der mindestens einen Schicht (12) des nicht-opaken Kunststoffmaterials überlappt.

16. Verfahren nach einem der Ansprüche 11 bis 15, wobei eine Kompensationsschicht (22) auf jede Seite der mindestens einen Schicht (12) des nicht-opaken Kunststoffmaterials laminiert wird, wobei jede Kompensationsschicht (22) ein Fenster (25) aufweist, das durch die gesamte Dicke der Kompensationsschicht (22) hindurch in Übereinstimmung mit der zweiten Region (15) ausgeschnitten worden ist.

17. Verfahren zur Herstellung eines Sicherheitsartikels, umfassend Implementieren eines Verfahrens zur Herstellung einer mehrschichtigen Struktur (28) gemäß einem der Ansprüche 11 bis 16, und Einschließen der mehrschichtigen Struktur (28), die nach dem Verfahren zur Herstellung der mehrschichtigen Struktur (28) erhalten wurde, in den Sicherheitsartikel, wobei der Sicherheitsartikel ausgewählt ist aus der Liste bestehend aus einem Reisepass, einer Seite eines Reisepasses, einem Ausweis, einem Führerschein, einer Transportkarte, einer Zugangskarte, einer Münze, einer Casinomünze, einem Casinojeton, einer Kreditkarte, einer Zahlungskarte, einer Banknote, einem Buchungsbeleg und einem gesicherten Etikett.

18. Verfahren nach Anspruch 17, wobei das Sicherheitselement in mindestens eine Schicht (12) aus nicht-opakem Kunststoffmaterial eingebettet ist oder darauf aufgebracht ist.

19. Verfahren nach Anspruch 16 oder 17, wobei ein Sicherheitselement (51, 52) zwischen zwei Schichten eingefügt wird oder auf eine Schicht aufgebracht wird, die ausgewählt ist aus der Liste bestehend aus der mindestens einen Schicht (12) aus nicht-opakem Kunststoffmaterial, der mindestens einen Kompensationsschicht (22) und einer Decküberzugschicht (24).

20. Verfahren nach den Ansprüchen 18 oder 19, wobei das Sicherheitselement in der Liste enthalten ist, die aus einem Sicherheitsfaden, einer Folie, einem Fremdmaterial, einem Druck, einer Metallisierung und einer Demetallisierung besteht.

21. Verfahren nach einem der vorhergehenden Ansprüche, wobei die mindestens eine Schicht (12) aus nicht-opakem Kunstoffmaterial durch Spritzung um mindestens ein Element ausgewählt aus der Liste bestehend aus einem Chip (50) zur kontaktlosen Kommunikation und einer Antenne (40) hergestellt wird.

22. Halbfertigprodukt zur Herstellung einer mehrschichtigen Struktur, bestehend aus einer Schicht (12) aus nicht-opakem Kunststoffmaterial, die aus dem Verfahren gemäß einem der Ansprüche 1 bis 10 erhalten wird, mit mindestens einer ersten Region (13) und mindestens einer zweiten Region (15), wobei die zweite Region (15) integral mit der ersten Region (13) gebildet ist und verglichen mit der ersten Region (13) eine Extradicke aufweist und über ihre Gesamtdicke eine einzige und homogene Schicht bildet.

23. Halbfertigprodukt nach einem der vorhergehenden Ansprüche, wobei mindestens ein Element ausgewählt aus der Liste bestehend aus einem Chip (50) zur kontaktlosen Kommunikation und einer Antenne (40) in die Schicht (12) aus nicht-opakem Kunststoffmaterial eingeführt worden ist.

24. Halbfertigprodukt nach Anspruch 22 oder 23, wobei die Schicht (12) des nicht-opaken Kunststoffmaterials aus einem thermoplastischen Material hergestellt ist.

## Revendications

1. Procédé de fabrication d'une couche non opaque (12) pour une structure multicouche (28) comprenant au moins une fenêtre (30), le procédé comprenant les étapes suivantes :
a) la fourniture d'au moins une couche (12) d'un matériau plastique non opaque, ayant une épaisseur initiale,
**caractérisé en ce qu'**il comprend en outre
b) la fourniture d'une plaque à motif (14) ayant au moins une cavité (16) dont la taille correspond à ladite au moins une fenêtre (30),
c) le recouvrement d'au moins une zone de ladite au moins une couche (12) de matériau plastique non opaque avec la plaque à motif (14), la cavité (16) étant ouverte vers une première surface de ladite au moins une couche (12) de matériau plastique non opaque,
d) le pressage de la plaque à motif (14) contre la première surface de ladite au moins une couche (12) de matériau plastique non opaque, de manière à former, dans ladite au moins une couche (12) de matériau plastique non opaque, au moins une première région (13) et une deuxième région (15), la deuxième région (15) correspondant à la cavité (16) et ayant une épaisseur supplémentaire par rapport à la première région (13),
e) le retrait de la plaque à motif (14) de la première surface de ladite au moins une couche (12) de matériau plastique non opaque.

2. Procédé selon la revendication 1, dans lequel la cavité (16) est une ouverture à travers l'épaisseur entière de la plaque à motif (14).

3. Procédé selon la revendication 1 ou 2, dans lequel une plaque de recouvrement (18) est prévue pour recouvrir l'ouverture lors du pressage de la plaque à motif (14) contre la première surface de ladite au moins une couche (12) de matériau plastique non opaque, de telle sorte que la plaque à motif (14) est disposée entre la plaque de recouvrement (18) et ladite au moins une couche (12), la plaque à motif (14) et la plaque de recouvrement (18) étant retirées une fois la deuxième région (15) formée.

4. Procédé selon la revendication 1, dans lequel la cavité (16) est un creux dans la plaque à motif (14).

5. Procédé selon une quelconque revendication précédente, dans laquelle ladite au moins une couche (12) de matériau plastique non opaque est un thermoplastique compris dans la liste constituée par le polycarbonate, le poly(chlorure de vinyle), le téréphtalate de polyéthylène, le téréphtalate de polyéthylène modifié au glycol, le téréphtalate de polyéthylène en film, l'acide polylactique, le polyéthylène et le polyestercarbonate.

6. Procédé selon une quelconque revendication précédente, comprenant au moins un cycle de pressage à chaud.

7. Procédé selon la revendication précédente, comprenant un cycle de pressage à chaud de ladite au moins une couche (12) de matériau plastique non opaque et de ladite plaque à motif (14) avec une température dans une gamme de 120 °C à 195 °C et une pression dans une gamme de 17 à 110 N/cm², sur une durée comprise entre 15 et 45 min.

8. Procédé selon la revendication précédente, comprenant au moins un cycle de pressage à froid, après le cycle de pressage à chaud.

9. Procédé selon la revendication précédente, comprenant un cycle de pressage à froid, après le cycle de pressage à chaud, avec une température dans une gamme de 15 °C à 25 °C et une pression dans une gamme de 50 à 220 N/cm², sur une durée comprise entre 13 et 45 min.

10. Procédé selon une quelconque revendication précédente, dans lequel ladite au moins une couche (12) de matériau plastique non opaque est constituée d'un polymère thermoplastique ou d'un polymère réticulé thermiquement, ayant une température de transition vitreuse comprise entre -100 °C et 300 °C, et de préférence entre 50 °C et 190 °C.

11. Procédé de fabrication d'une structure multicouche (28), comprenant les étapes suivantes :
- la fourniture d'au moins une couche (12) de matériau plastique non opaque, obtenue à partir du procédé selon une des revendications précédentes,
- la fourniture d'une couche de compensation (22) ayant au moins une fenêtre (25) découpée à travers l'épaisseur entière de la couche de compensation (22), et
- le dépôt de la couche de compensation (22) sur au moins une partie de la première région de ladite au moins une couche (12) de matériau plastique non opaque, avec la deuxième région (15) de ladite au moins une couche (12) de matériau plastique non opaque, préalablement formée, et la fenêtre (25) de la couche de compensation (22) en coïncidence, et
- la stratification d'une multicouche comprenant ladite au moins une couche (12) de matériau plastique non opaque et la couche de compensation (22) pour obtenir la structure multicouche (28).

12. Procédé selon la revendication précédente, comprenant en outre la découpe d'au moins une carte (10), ou d'au moins une partie d'un passeport ou d'une page de passeport dans la structure multicouche (28).

13. Procédé selon une quelconque revendication précédente, dans lequel deux couches de matériau plastique non opaque sont stratifiées ensemble pour former ladite au moins une couche (12) de matériau plastique non opaque.

14. Procédé selon la revendication précédente, dans lequel au moins un élément choisi dans la liste constituée par une puce (50) de communication sans contact et une antenne (40) est inséré entre les deux couches de matériau plastique non opaque avant la stratification pour former ladite au moins une couche (12) de matériau plastique non opaque.

15. Procédé selon l'une quelconque des revendications 11 à 14, dans lequel au moins une couche de finition (24) est stratifiée avec ladite au moins une couche (12) de matériau plastique non opaque et ladite couche de compensation (22) de manière à chevaucher au moins une partie de la couche de compensation (22) et la deuxième région (15) de ladite au moins une couche (12) de matériau plastique non opaque.

16. Procédé selon l'une quelconque des revendications 11 à 15, dans lequel une couche de compensation (22) est stratifiée sur chaque côté de ladite au moins une couche (12) de matériau plastique non opaque, chaque couche de compensation (22) ayant une fenêtre (25) découpée à travers l'épaisseur entière de la couche de compensation (22) en coïncidence avec la deuxième région (15).

17. Procédé de fabrication d'un article de sécurité, comprenant la mise en œuvre d'un procédé de fabrication d'une structure multicouche (28) selon l'une quelconque des revendications 11 à 16, et comportant, dans ledit article de sécurité, la structure multicouche (28) obtenue par ledit procédé de fabrication de la structure multicouche (28), l'article de sécurité étant choisi dans la liste constituée par un passeport, une page de passeport, une carte d'identité, un permis de conduire, une carte de transport, une carte d'accès, une pièce de monnaie, un jeton de casino, une plaque de casino, une carte de crédit, une carte de paiement, un billet de banque, un bon et une étiquette sécurisée.

18. Procédé selon la revendication 17, dans lequel un élément de sécurité est incorporé dans ou appliqué sur ladite au moins une couche (12) de matériau plastique non opaque.

19. Procédé selon la revendication 16 ou 17, dans lequel un élément de sécurité (51, 52) est inséré entre deux couches, ou appliqué sur une couche, choisies dans la liste constituée par ladite au moins une couche (12) de matériau plastique non opaque, ladite au moins une couche de compensation (22) et une couche de finition (24).

20. Procédé selon la revendication 18 ou 19, dans lequel l'élément de sécurité est compris dans la liste constituée par un fil de sécurité, une feuille, une pièce de matière, une impression, une métallisation, et une démétallisation.

21. Procédé selon l'une quelconque des revendications précédentes, dans lequel ladite au moins une couche (12) de matériau plastique non opaque est fabriquée par injection autour d'au moins un élément choisi dans la liste constituée par une puce (50) de communication sans contact et une antenne (40).

22. Produit semi-fini pour la fabrication d'une structure multicouche, consistant en une couche (12) de matériau plastique non opaque obtenue à partir du procédé selon l'une quelconque des revendications 1 à 10, ayant au moins une première région (13) et au moins une deuxième région (15), la deuxième région (15) étant formée d'une seule pièce avec la première région (13), ayant une épaisseur supplémentaire par rapport à la première région (13), et formant une couche unique et homogène sur son épaisseur entière.

23. Produit semi-fini selon la revendication précédente, dans lequel au moins un élément choisi dans la liste constituée par une puce (50) de communication sans contact et une antenne (40) est inséré dans la couche (12) de matériau plastique non opaque.

24. Produit semi-fini selon la revendication 22 ou 23 dans lequel la couche (12) de matériau plastique non opaque est constituée d'un matériau thermoplastique.
